# EUROPEAN PATENT APPLICATION

(11) **EP 4 752 735 A1**
(43) Date of publication of application: **03.06.2026**
(21) Application number: 25219129.1
(22) Date of filing: 27.11.2025
(51) Int. Cl.: G06F 12/02, H10B 80/00, H10W 90/10, H10W 90/20, H10W 90/26

(54) **SEMICONDUCTOR DEVICE INCLUDING SEMICONDUCTOR CHIPS AND OPERATING METHOD THEREOF**

(30) Priority: 02.12.2024 KR 20240176902
(71) Applicant: Samsung Electronics Co., Ltd., Suwon-si, Gyeonggi-do 16677 (KR)
(72) Inventor: CHANG, Joonyoung, 16677 Suwon-si (KR); KIM, Sangmin, 16677 Suwon-si (KR); PARK, Sungcheol, 16677 Suwon-si (KR); SEO, Youngduke, 16677 Suwon-si (KR); CHOI, Geunho, 16677 Suwon-si (KR); HAN, Solbi, 16677 Suwon-si (KR)
(74) Representative: Marks & Clerk LLP

(57) **Abstract**

A semiconductor device includes a plurality of homogeneous semiconductor chips, and an interposer on which the plurality of homogeneous semiconductor chips are disposed. Each of the plurality of homogeneous semiconductor chips manages a memory map including address information. The memory map includes a plurality of system memory regions respectively allocated to the plurality of homogeneous semiconductor chips, and a private memory region shared by the plurality of homogeneous semiconductor chips. The private memory region is mirrored and copied to a mirror region of each of the plurality of system memory regions, and the plurality of homogeneous semiconductor chips perform internal operations by using the private memory region.

## Description

### BACKGROUND

The present disclosure relates to a semiconductor device and an operating method of the semiconductor device. More specifically, the present disclosure relates to a semiconductor device including homogeneous semiconductor chips and an operating method of the semiconductor device.

In the semiconductor industry, the demand for high-capacity, thinner, and smaller semiconductor devices and electronic devices using the semiconductor devices increases, and various packaging technologies related thereto are continuously developed. A semiconductor package of an electronic device includes semiconductor chips, which are suitable for use in an electronic product.

In general, semiconductor chips are fabricated in a repetitive pattern in a wafer formed of a semiconductor material. The wafer is divided into a large number of individual semiconductor dies, and the divided semiconductor dies are each packaged as semiconductor chips. Chiplet technology is applied to form a high-performance semiconductor package by mounting various semiconductor chips on an interposer substrate.

### SUMMARY

The present disclosure (e.g., the inventive concept of the present disclosure) provides a semiconductor device that performs stable control by including homogeneous semiconductor chips and a memory map that is managed by each of the homogeneous semiconductor chips and includes a private region.

According to an aspect of the present disclosure (e.g., the inventive concept of the present disclosure), a semiconductor device includes a plurality of homogeneous semiconductor chips, and an interposer on which the plurality of homogeneous semiconductor chips are disposed, wherein each of the plurality of homogeneous semiconductor chips manages a memory map including address information, the memory map includes a plurality of system memory regions respectively allocated to the plurality of homogeneous semiconductor chips, and a private memory region shared by the plurality of homogeneous semiconductor chips, the private memory region is mirrored and copied to a mirror region of each of the plurality of system memory regions, and the plurality of homogeneous semiconductor chips perform internal operations by using the private memory region.

In an embodiment, each of the plurality of homogeneous semiconductor chips may include a processor, a memory controller configured to control an external memory device, and a network configured to manage the memory map and connect the processor to the memory controller, and the processor may access the memory controller of another semiconductor chip by using the system memory region corresponding to another semiconductor chip.

In an embodiment, each of the plurality of homogeneous semiconductor chips may include a first interface for communicating with each other and may access another semiconductor chip through the first interface by using a corresponding system memory region.

In an embodiment, the semiconductor device may further include a plurality of memory chips for communicating with the plurality of semiconductor chips, and each of the plurality of semiconductor chips may include a second interface for communicating with the plurality of memory chips.

According to another aspect of the present disclosure, a semiconductor device includes a first semiconductor chip and a second semiconductor chip, which are homogeneous, and an interposer on which the first semiconductor chip and the second semiconductor chip are mounted, wherein each of the first semiconductor chip and the second semiconductor chip manages a memory map including address information, the memory map includes a private memory region shared by the first semiconductor chip and the second semiconductor chip, a first system memory region allocated to the first semiconductor chip and including a first mirror region to which the private memory region is copied, and a second system memory region allocated to the second semiconductor chip and including a second mirror region to which the private memory region is copied, and the first semiconductor chip accesses the second semiconductor chip by using the second system memory region, and the second semiconductor chip accesses the first semiconductor chip by using the first system memory region.

In an embodiment, the first semiconductor chip may perform an internal operation by using one of the private memory region and the first mirror region.

In an embodiment, the memory map may sequentially assign a minimum address to a maximum address to the private memory region, the first system memory region, and the second system memory region.

According to another aspect of the present disclosure, an operating method of a semiconductor device including a plurality of semiconductor chips includes assigning unique numbers to the plurality of semiconductor chips, allocating a plurality of system memory regions of a memory map including address information respectively corresponding to the plurality of semiconductor chips, based on the unique numbers, allowing each of the plurality of semiconductor chips to access another semiconductor chip in the plurality of semiconductor chips by using an address of the another semiconductor chip in the plurality of system memory regions of the memory map, and performing an internal operation of each of the plurality of semiconductor chips by using an address of a private memory region of the memory map.

At least some of the above and other features of the invention are set out in the claims.

### BRIEF DESCRIPTION OF THE DRAWINGS

Embodiments of the present disclosure will be more clearly understood from the following detailed description taken in conjunction with the accompanying drawings in which:
FIG. 1 is a diagram illustrating a semiconductor device according to an embodiment;
FIG. 2 is a block diagram illustrating a first semiconductor chip and a second semiconductor chip according to an embodiment;
FIG. 3 is a diagram illustrating a memory map used for each of a plurality of semiconductor chips included in a semiconductor device according to an embodiment;
FIG. 4A is a diagram illustrating a memory map for performing an operation on a first semiconductor chip, and FIG. 4B is a diagram illustrating a memory map for performing an operation on a second semiconductor chip;
FIG. 5 is a flowchart illustrating an operating method of a semiconductor device, according to an embodiment;
FIG. 6A and FIG. 6B are diagrams illustrating operating methods of a semiconductor device, according to embodiments;
FIG. 7 and FIG. 8 are flowcharts illustrating operating methods of a semiconductor device, according to embodiments;
FIG. 9 is a diagram illustrating a semiconductor device according to an embodiment;
FIG. 10 is a diagram illustrating a memory map used in each of a plurality of semiconductor chips included in a semiconductor device, according to an embodiment;
FIG. 11A and FIG. 11B are diagrams illustrating semiconductor devices according to embodiments;
FIG. 12 is a diagram illustrating a semiconductor device according to an embodiment;
FIG. 13 is a cross-sectional view illustrating a memory chip included in a semiconductor device according to an embodiment; and
FIG. 14 is a block diagram of a system illustrating an electronic device including a semiconductor device, according to an embodiment.

### DETAILED DESCRIPTION OF THE EMBODIMENTS

Hereinafter, various embodiments are described with reference to the attached drawings.

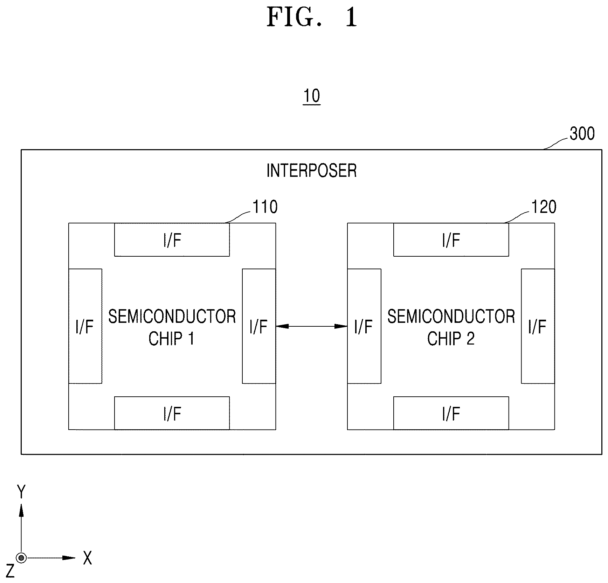

FIG. 1 is a diagram illustrating a semiconductor device 10 according to an embodiment.

Referring to FIG. 1, the semiconductor device 10 may include an interposer 300 and a plurality of semiconductor chips, for example, a first semiconductor chip 110 and a second semiconductor chip 120. Here, the first semiconductor chip 110 and the second semiconductor chip 120 may be homogeneous semiconductor chips. Although FIG. 1 illustrates only the first semiconductor chip 110 and the second semiconductor chip 120, the present disclosure is not limited thereto, and the semiconductor device 10 may include many homogeneous semiconductor chips and may also further include heterogeneous semiconductor chips. In some embodiments, the semiconductor device 10 may be a system on chip (SoC) and may be a 2.5 dimensional (2.5D) SoC.

The interposer 300 may be a redistribution substrate. The interposer 300 may be configured such that the first semiconductor chip 110 is electrically connected to the second semiconductor chip 120, and/or the first semiconductor chip 110 and the second semiconductor chip 120 are electrically connected to another chip. The interposer 300 may have wiring layers and vias that connect the wiring layers to each other. In some embodiments, the interposer 300 may be a silicon interposer substrate including a through silicon via (TSV) but is not limited thereto.

The first semiconductor chip 110 and the second semiconductor chip 120 may be disposed (e.g., mounted) on the interposer 300 in a vertical direction (a Z-axis direction). The first semiconductor chip 110 and the second semiconductor chip 120 may be arranged side by side on an upper surface of the interposer 300 in an X-axis direction. The first semiconductor chip 110 may communicate with the second semiconductor chip 120 through an interface. The first semiconductor chip 110 may be connected to the second semiconductor chip 120 through a high speed input/output (HSIO) and may be coupled to the second semiconductor chip 120 by, for example, a die-to-die (D2D) interface or a chip-to-chip (C2C) interface. For example, the first semiconductor chip 110 may communicate with the second semiconductor chip 120 via a universal chiplet interconnect express (UCIe) interface.

Although FIG. 1 illustrates that each of the first semiconductor chip 110 and the second semiconductor chip 120 includes four interfaces arranged in the first direction (the X-axis direction) and the second direction (a Y-axis direction), the present disclosure is not limited thereto. Each of the first semiconductor chip 110 and the second semiconductor chip 120 may include at least one interface for communicating with each other and may be disposed (e.g., mounted) on the interposer 300 such that the at least one interface faces each other.

The interposer 300 may be on a substrate. The substrate may include a printed circuit board (PCB), a ceramic substrate, a glass substrate, a tape wiring substrate, or so on. According to an embodiment, the substrate may be a large-area package substrate on which the first semiconductor chip 110 and the second semiconductor chip 120 are disposed (e.g., mounted). For example, the substrate may have a flat shape, such as a square or a rectangle.

In some embodiments, the first semiconductor chip 110 and the second semiconductor chip 120 may each be a logic semiconductor chip. In some embodiments, the first semiconductor chip 110 and the second semiconductor chip 120 may each be a server chip or an accelerator chip. For example, the first semiconductor chip 110 may include a central processing unit (CPU), a graphics processing unit (GPU), a field-programmable gate array (FPGA), a digital signal processor, an encryption processor, a microprocessor, or a microcontroller. The semiconductor device 10 may be an application processor (AP), such as an application-specific integrated circuit (ASIC) but is not limited thereto.

In the present disclosure, a semiconductor chip may refer to a semiconductor chiplet die. The semiconductor chiplet die may be a unit that constitutes a semiconductor die including one or more cores. Multiple chiplet dies may be integrated to function as one semiconductor die. In some embodiments, the multiple chiplet dies, which may function as one semiconductor die, may be individualized to respectively configure individualized upper packages. The individualized upper packages may be disposed (e.g., mounted) on a lower module substrate and may be electrically connected to each other by the lower module substrate. With the individualized upper packages disposed (e.g., mounted) on the lower module substrate, a semiconductor package module including the lower module substrate may be configured as a package that may perform the function of one semiconductor die.

In some embodiments, the multiple chiplet dies may refer to individual chips that constitute a multi-chip module (MCM). For example, the multiple chiplet dies may each include at least one of an input/output circuit, an analog circuit, a memory circuit, and a serial-to-parallel conversion circuit. Alternatively, the multiple chiplet dies may each include at least one of a central processing unit (CPU), a graphics processing unit (GPU), and a field-programmable gate array (FPGA). The number of chiplet dies disposed (e.g., mounted) on the interposer 300 is not limited in particular, and a greater number of chiplet dies than the number of chiplet dies illustrated in the drawings may also be disposed (e.g., mounted) on the interposer 300.

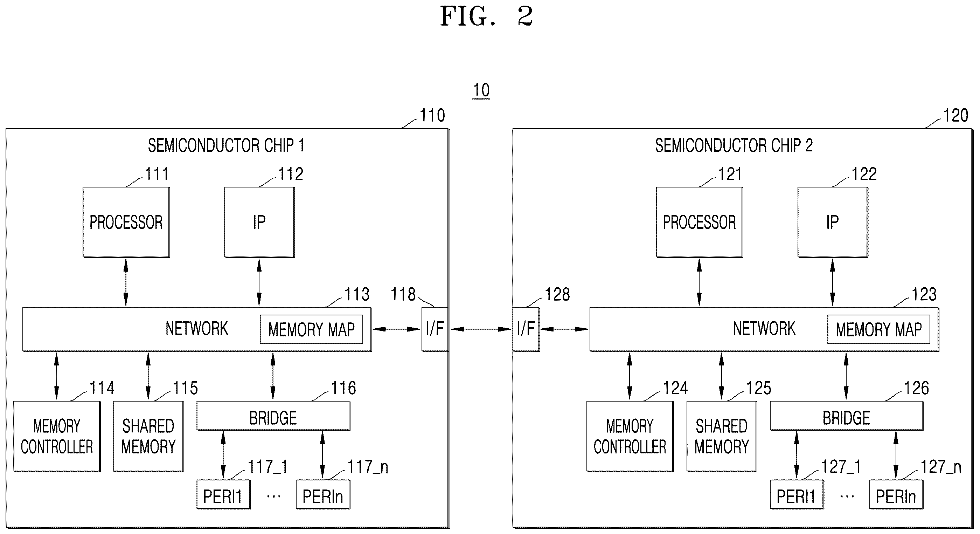

FIG. 2 is a block diagram illustrating the first semiconductor chip 110 and the second semiconductor chip 120 according to an embodiment.

Referring to FIG. 2, the first semiconductor chip 110 may include a processor 111, a function block (intellectual property (IP)) 112, a network 113, a memory controller 114, a shared memory 115, a bridge 116, a first peripheral function block (PERI1) 117_1 to an n^{th} peripheral function block to (PERIn) 117_n, and an interface 118. The second semiconductor chip 120 may include a processor 121, a function block 122, a network 123, a memory controller 124, a shared memory 125, a bridge 126, a first peripheral function block 127_1 to an n^{th} peripheral function block 127_n, and an interface 128. The first semiconductor chip 110 and the second semiconductor chip 120 are homogeneous semiconductor chips and may include the same configuration, and the description on the internal configuration of the first semiconductor chip 110 may be applied to the internal configuration of the second semiconductor chip 120.

The processors 111 and 121 included respectively in the first semiconductor chip 110 and the second semiconductor chip 120 may include homogeneous multi-cores or heterogeneous multi-cores. For example, the processors 111 and 121 may be any one of a CPU, a GPU, an image signal processor (ISP), a digital signal processor (DSP), a vision processing unit (VPU), and a neural processing unit (NPU), and the number of processors 111 and 121 may be one or more. The processors 111 and 121 may execute various types of software (e.g., one or more of an application program, an operating system, a file system, device driver code, and boot code) loaded in the shared memories 115 and 125.

The function blocks 112 and 122 included respectively in the first semiconductor chip 110 and the second semiconductor chip 120 may be circuits or chips designed to perform certain functions. For example, the function blocks 112 and 122 may each include a circuit for an artificial intelligence (AI) operation.

The network 113 of the first semiconductor chip 110 may provide a communication path between internal components of the first semiconductor chip 110. The network 113 provide an interface between internal components. For example, the network 113 may provide a communication path between the processor 111, the function block 112, the memory controller 114, the shared memory 115, the bridge 116, the first peripheral function block 117_1 to the n^{th} peripheral function block 117_n, and the interface 118.

The processor 111 may access respective components of the first semiconductor chip 110 in a memory mapped input/output (MMIO) manner and may access the components by using a memory map of the network 113. The network 113 may manage a memory map including address information.

The network 123 of the second semiconductor chip 120 may provide a communication path between internal components of the second semiconductor chip 120. The processor 121 may access respective components of the second semiconductor chip 120 in an MMIO manner and may access the components by using a memory map of the network 123. In some embodiments, the networks 113 and 123 may each be a network-on-chip (NoC).

The memory map of the first semiconductor chip 110 and the memory map of the second semiconductor chip 120 may include the same address information. Therefore, the semiconductor device 10 may have the same effect as using one semiconductor chip when using the first semiconductor chip 110 and the second semiconductor chip 120, and a space for loading software executed in the first semiconductor chip 110 and the second semiconductor chip 120 may be reduced and maintainability may be improved.

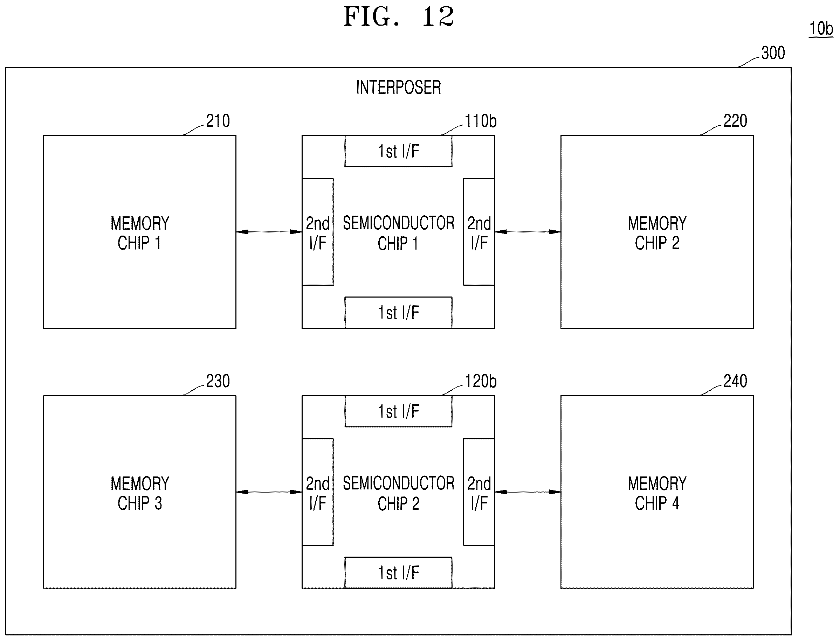

The memory controller 114 of the first semiconductor chip 110 and the memory controller 124 of the second semiconductor chip 120 may each control external memory devices (for example, 210, 220, 230, and 240 of FIG. 12) of the first semiconductor chip 110 and the second semiconductor chip 120.

In some embodiments, the first semiconductor chip 110 and the second semiconductor chip 120 may perform one or more operations, such as addition/subtraction/multiplication/division operations and vector operations, address operations, fast Fourier transform (FFT) operations, or so on by using memory devices. Also, the first semiconductor chip 110 and the second semiconductor chip 120 may perform a function for inference by using memory devices. Here, the inference may be performed by a deep learning algorithm using an artificial neural network. The deep learning algorithm may include a training operation for training a model through various data and an inference operation of recognizing data by using the trained model. Also, memory devices may be used as temporary storages for operating systems and application data by loading the operating systems and application data, or as execution spaces for various types of software code.

For example, the semiconductor device 10 may include a plurality of dynamic random access memories (DRAMs), and the memory controllers 114 and 124 may be DRAM controllers. However, the semiconductor device 10 is not limited thereto, and as long as a bandwidth, a response speed, and voltage conditions are satisfied, any memory device, such as phase-change random access memory (PRAM), static random access memory (SRAM), magnetoresistive random access memory (MRAM), resistive random access memory RRAM), ferroelectric random access memory (FeRAM), or Hybrid RAM may be used as the semiconductor device 10.

The memory controllers 114 and 124 may access an external memory device in a direct memory access (DMA) manner. For example, the memory controller 114 may include one or more of a command queue, a command scheduler, a read data queue, a write data queue and a physical layer (PHY).

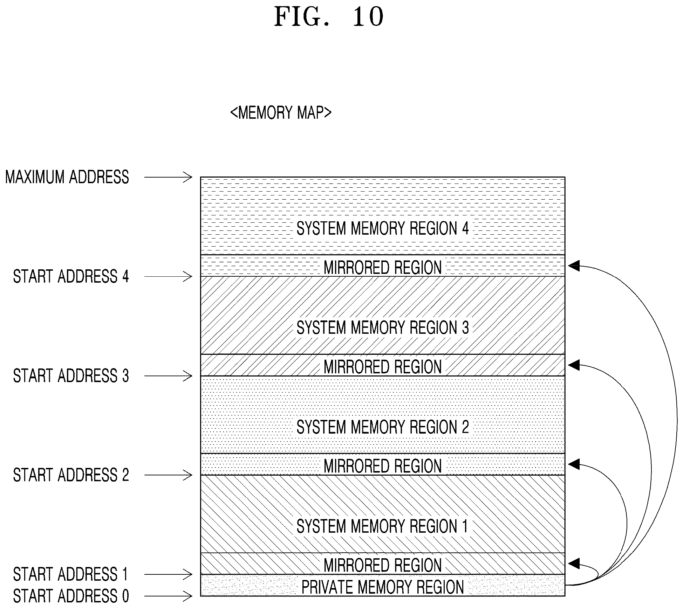

The shared memory 115 included in the first semiconductor chip 110 may store one or more programs, systems and/or drivers (e.g., one or more of an application program, an operating system, a file system, and a device driver) for driving the first semiconductor chip 110, and the shared memory 125 included in the second semiconductor chip 120 may store one or more programs, systems and/or drivers (e.g., one or more of an application program, an operating system, a file system and a device driver) for driving the second semiconductor chip 120. For example, the shared memories 115 and 125 included respectively in the first semiconductor chip 110 and the second semiconductor chip 120 may each be an SRAM device having a faster data input/output speed than external memory devices (for example, 310, 320, 330, 340 of FIG. 10) of the first semiconductor chip 110 and the second semiconductor chip 120 connected respectively to the memory controllers 114 and 124.

The bridge 116 of the first semiconductor chip 110 may be connected to the first peripheral function block 117_1 to the n^{th} peripheral function block 117_n, and the bridge 126 of the second semiconductor chip 120 may be connected to the first peripheral function block 127_1 to the n^{th} peripheral function block 127_n. For example, the data processed by the first peripheral function blocks 117_1 and 127_1 to the n^{th} peripheral function blocks 117_n and 127_n may be transmitted to other configurations of the first semiconductor chip 110 and the second semiconductor chip 120 through the bridges 116 and 126 to be used thereby, and in this case, the bridges 116 and 126 may each perform an operation, such as protocol conversion or switching.

The first peripheral function block 117_1 to the n^{th} peripheral function block 117_n of the first semiconductor chip 110 and the first peripheral function block 127_1 to the n^{th} peripheral function block 127_n of the second semiconductor chip 120 may each include a universal asynchronous receiver/transmitter (UART), a serial peripheral interface (SPI), a mailbox, a system register block, or so on. The first peripheral function blocks 117_1 and 127_1 to the n^{th} peripheral function blocks 117_n and 127_n may each include, for example, a remap register block for remapping a memory map. When a remap signal (or a removal signal) for changing a memory map is received from the outside of the first semiconductor chip 110 and the second semiconductor chip 120, or when a signal for assigning a unique number to each of the first semiconductor chip 110 and the second semiconductor chip 120 is received, the processor 111 or 121 of each of the first and second semiconductor chips 110 and 120 may access the remap register block to change the memory map managed by the network 113 or 123.

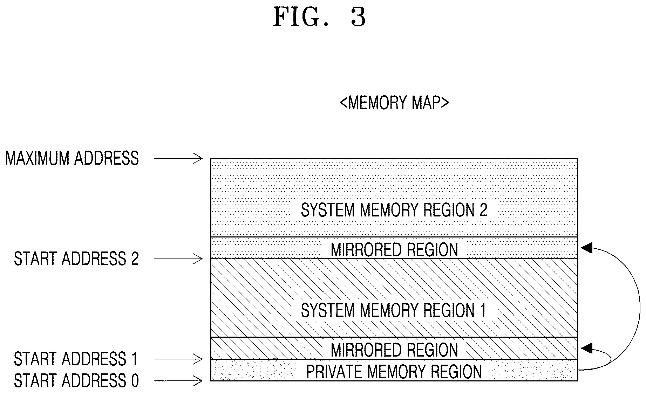

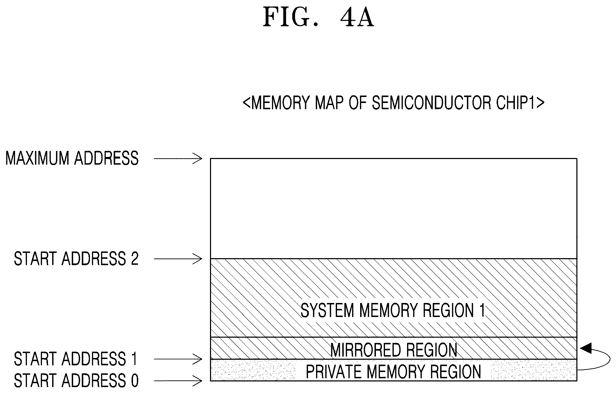

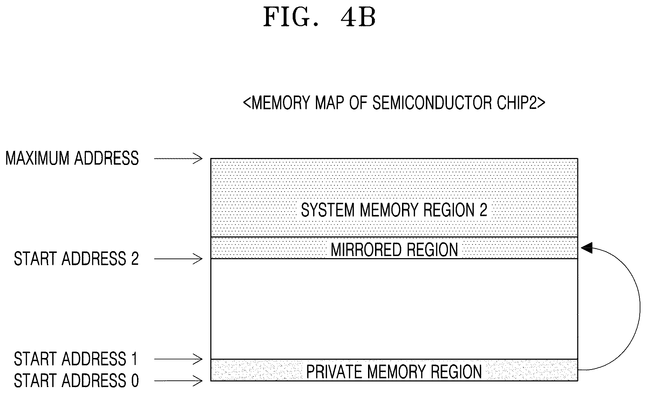

FIG. 3 is a diagram illustrating a memory map used in each of a plurality of semiconductor chips included in the semiconductor device 10 according to an embodiment. FIG. 4A is a diagram illustrating a memory map for performing an operation of the first semiconductor chip 110, and FIG. 4B is a diagram illustrating a memory map for performing an operation of the second semiconductor chip 120.

Referring to FIG. 1 and FIG. 3, the memory map may include a plurality of system memory regions (for example, a first system memory region and a second system memory region) respectively corresponding to a plurality of semiconductor chips (for example, the first semiconductor chip 110 and the second semiconductor chip 120) included in the semiconductor device 10. The plurality of semiconductor chips may correspond 1:1 with the plurality of system memory regions, e.g., the plurality of semiconductor chips may have a one-on-one relationship with the plurality of system memory regions. Also, the memory map may include a private memory region shared by a plurality of semiconductor chips, for example, the first semiconductor chip 110 and the second semiconductor chip 120. The first semiconductor chip 110 and the second semiconductor chip 120 may use the same memory map including the same address information, and accordingly, the semiconductor device 10 may have an effect of using the first semiconductor chip 110 and the second semiconductor chip 120 as one semiconductor chip.

A minimum address to a maximum address of the memory map may be sequentially assigned to the private memory region, the first system memory region, and the second system memory region. For example, the minimum address may be a start address (Start Address0) where the private memory region starts, and the private memory region may be allocated from the start address (Start Address0) to a region before a first start address (Start Address1) where the first system memory region starts. Also, the first system memory region may be allocated from the first start address (Start Address1) to a region before a second start address (Start Address2) where the second system memory region starts. The second system memory region may be allocated from the second start address (Start Address2) to the maximum address. FIG. 3 illustrates a memory map in which two homogeneous memory chips are included in the semiconductor device 10; however, a configuration of the memory map may change depending on the number of homogeneous semiconductor chips included in the semiconductor device 10.

The private memory region may be accessed by the first semiconductor chip 110 and the second semiconductor chip 120, and may be an address space used by the first semiconductor chip 110 to perform an internal operation, and may be an address space used by the second semiconductor chip 120 to perform an internal operation. That is, the first semiconductor chip 110 and the second semiconductor chip 120 may perform the internal operations by accessing the private memory region, which is the same address space in the memory map.

For example, the first semiconductor chip 110 and the second semiconductor chip 120 may execute boot code or may perform operations by using the private region of the memory map when performing a remap operation for changing address information of the memory map. The private region may be an address space that is not affected by a change operation of the memory map, and thus, a stable operation may be performed, and the design complexity of a semiconductor device may be reduced. Also, because each of semiconductor chips may perform an internal operation by using the private region, a logic for identifying and processing each of the semiconductor chips may be removed when executing code, and thus, the code may be optimized, and the operating performance may be improved.

The first system memory region may be an address space including address information on an operation of the first semiconductor chip 110, and the second system memory region may be an address space including address information on an operation of the second semiconductor chip 120. In order to drive the first semiconductor chip 110 and the second semiconductor chip 120, a unique number may be assigned to each of the first semiconductor chip 110 and the second semiconductor chip 120 as identification information, and the first system memory region may be allocated to the first semiconductor chip 110 to correspond to the unique number, and the second system memory region may be allocated to the second semiconductor chip 120 to correspond to the unique number. When the unique numbers of the first semiconductor chip 110 and the second semiconductor chip 120 are changed, the system memory regions respectively corresponding to the first semiconductor chip 110 and the second semiconductor chip 120 may also be changed. For example, the first semiconductor chip 110 may be changed to correspond to the second system memory region, and the second semiconductor chip 120 may be changed to correspond to the first system memory region. Each of the first system memory region and the second system memory region may include a mirror region to which the private memory region is copied.

Referring to FIG. 1 and FIG. 4A, the first semiconductor chip 110 may use the first system memory region or may use the private memory region to perform an operation. The second semiconductor chip 120 may access a configuration of the first semiconductor chip 110 by using the first system memory region to perform an operation on the first semiconductor chip 110.

The first system memory region may include a mirror region to which the private memory region is copied. Therefore, in order for the second semiconductor chip 120 to perform an operation on the first semiconductor chip 110 by using the private memory region, the second semiconductor chip 120 may access the mirror region of the first system memory region.

Referring to FIG. 1 and FIG. 4B, the second semiconductor chip 120 may use the second system memory region or may also use the private memory region to perform an operation. The first semiconductor chip 110 may access a configuration of the second semiconductor chip 120 by using the second system memory region to perform an operation on the second semiconductor chip 120.

The second system memory region may include a mirror region to which the private memory region is copied. Therefore, in order for the first semiconductor chip 110 to perform an operation on the second semiconductor chip 120 by using the private memory region, the first semiconductor chip 110 may access a mirror region of the second system memory region.

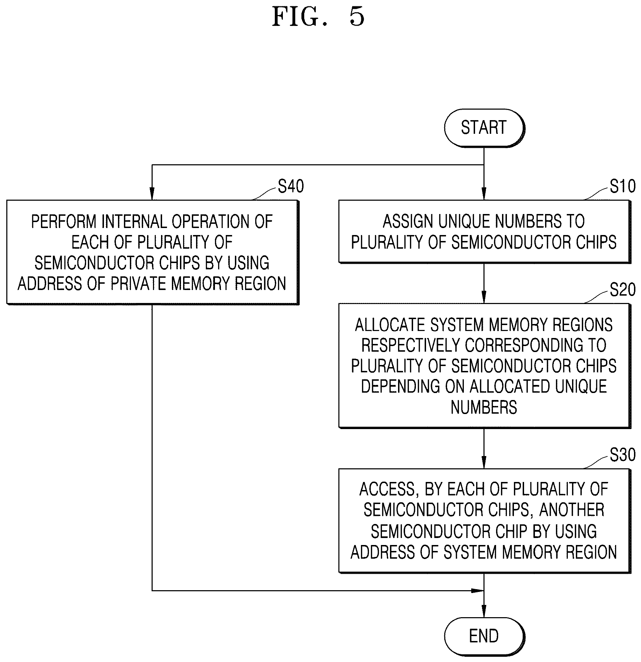

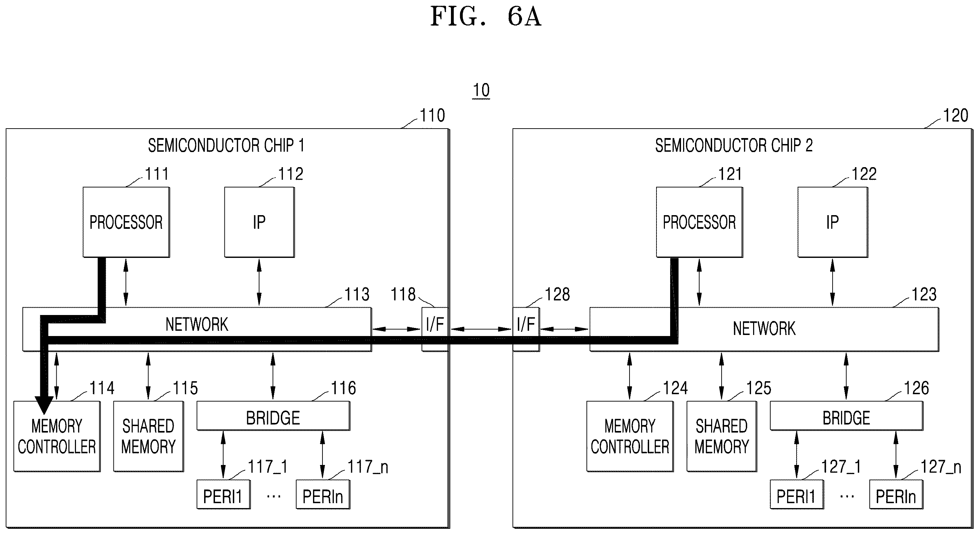

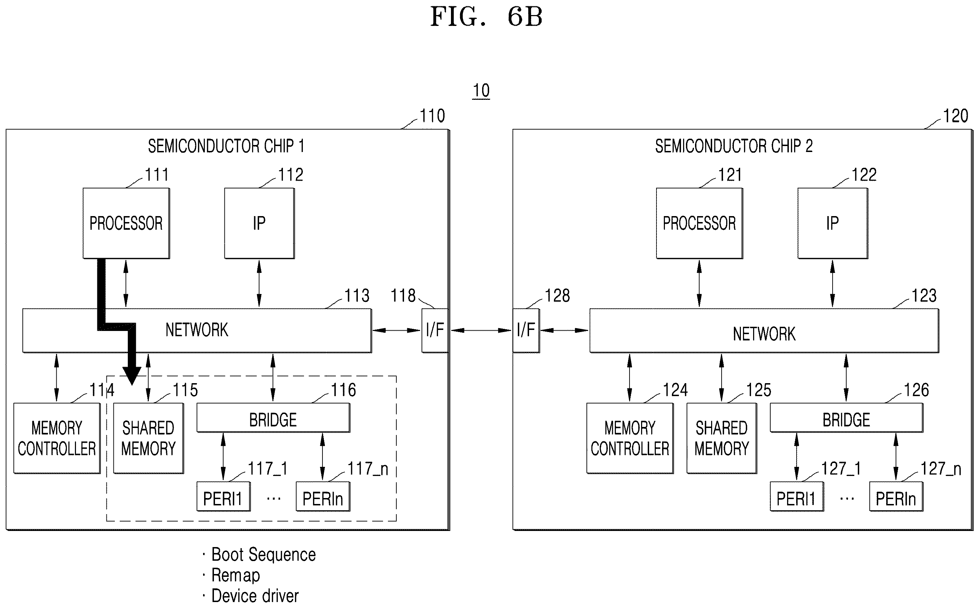

FIG. 5 is a flowchart illustrating an operating method of the semiconductor device 10, according to an embodiment. FIG. 6A and FIG. 6B are diagrams illustrating operating methods of the semiconductor device 10, according to embodiments.

Referring to FIG. 1 and FIG. 5, in operation S10, the semiconductor device 10 may assign unique numbers to the plurality of semiconductor chips (for example, the first semiconductor chip 110 and the second semiconductor chip 120).

In operation S20, the semiconductor device 10 may allocate system memory regions respectively corresponding to a plurality of semiconductor chips to the memory map including address information depending on the assigned unique numbers. For example, the first system memory region of FIG. 3 may be allocated to the first semiconductor chip 110, and the second system memory region of FIG. 3 may be allocated to the second semiconductor chip 120. Alternatively, depending on the assigned unique numbers, the second system memory region of FIG. 3 may also be allocated to the first semiconductor chip 110, and the first system memory region of FIG. 3 may also be allocated to the second semiconductor chip 120. The system memory regions may be assigned according to an order of the assigned unique numbers.

The first semiconductor chip 110 and the second semiconductor chip 120 may each receive information on the unique number thereof from the outside as semiconductor chip identification information. The first semiconductor chip 110 may identify an address space of the memory map allocated to the first semiconductor chip 110 from the information on the unique number, and the second semiconductor chip 120 may identify an address space of the memory map allocated to the second semiconductor chip 120 from the information on the unique number.

Referring to FIG. 5 and FIG. 6A, in operation S30, each of a plurality of semiconductor chips may access another semiconductor chip by using an address of a system memory region of a memory map. For example, the processor 121 of the second semiconductor chip 120 may access the first semiconductor chip 110 and access the memory controller 114 of the first semiconductor chip 110 by using the address of the first system memory region. The processor 111 of the first semiconductor chip 110 may also access the memory controller 114 by using the address of the first system memory region.

Referring to FIG. 5 and FIG. 6B, in operation S40, each of the plurality of semiconductor chips may perform an internal operation by using an address of the private memory region of the memory map. For example, the processor 111 of the first semiconductor chip 110 may access the shared memory 115 or the first peripheral function block 117_1 to the n^{th} peripheral function block 117n by using the private memory region. The private memory region is mirrored to a mirror region of the system memory region, and accordingly, the processor 111 of the first semiconductor chip 110 may also access the shared memory 115 or the first peripheral function block 117_1 to the n^{th} peripheral function block 117n by using the mirror region instead of the private memory region.

In some embodiments, the first semiconductor chip 110 may execute boot code to perform a boot sequence, and the processor 111 may execute the boot code loaded into the shared memory 115 by using the private memory region. In order to perform the boot sequence, an external memory (for example, DRAM) of the first semiconductor chip 110 may also be used in addition to the shared memory 115 that is an internal memory of the first semiconductor chip 110, and the processor 111 may also access the memory controller 114 by using the private memory region to perform the boot sequence. Alternatively, the processor 111 may access iROM or iRAM by using the private memory region to perform the boot sequence.

Alternatively or in addition, in some embodiments, the n^{th} peripheral function block 117_n may be a remap register block used to change a memory map, and the processor 111 may access the remap register block by using the private memory region. The processor 111 may remap the memory map in response to the semiconductor chip identification information of the first semiconductor chip 110 received from the outside or a remap signal by accessing the remap register block. A remap operation for changing the address information of the memory map may be performed by using the address information of the private memory region of the memory map, and accordingly, the remap operation may be stably performed even when the information on system memory regions respectively corresponding to semiconductor devices is changed.

Alternatively or in addition, in some embodiments, device driver code for controlling the first peripheral function block 117_1 to the n^{th} peripheral function block 117_n may be loaded into the shared memory 115. The processor 111 may execute the device driver code by using the private memory region.

In some embodiments, operation S40 may be performed independently of operation S10 and operation S20. That is, even when system memory regions are not allocated to a plurality of semiconductor chips, each of the plurality of semiconductor chips may perform an internal operation (for example, a boot sequence) by using the private memory region. Therefore, a stable boot sequence operation may be performed, a logic for identifying and processing a semiconductor chip during execution of boot code may be removed to optimize code, and the operation performance may be improved.

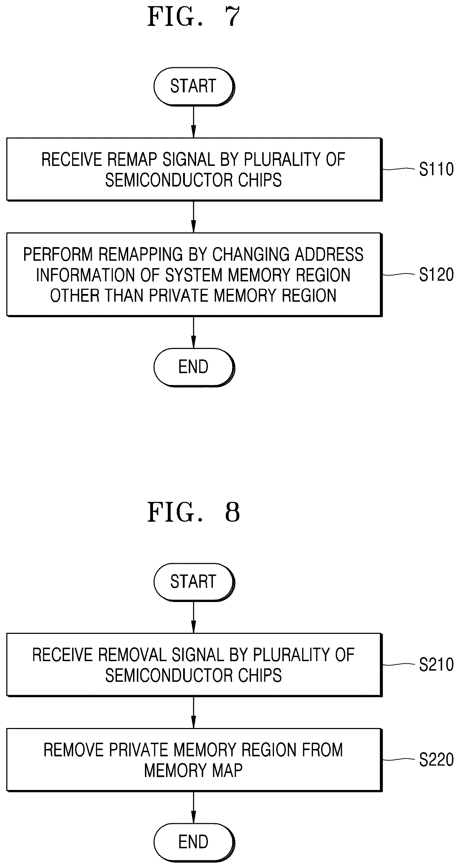

FIG. 7 and FIG. 8 are flowcharts illustrating operating methods of a semiconductor device 10, according to some embodiments.

Referring to FIG. 1 and FIG. 7, in operation S110, the plurality of semiconductor chips, for example, the first semiconductor chip 110 and the second semiconductor chip 120, may receive a remap signal. In operation S120, the first semiconductor chip 110 and the second semiconductor chip 120 may each perform a remapping operation for changing address information of a system memory region (for example, the first system memory region and the second system memory region of FIG. 3) other than the private memory region in the memory map, in response to the remap signal. For example, unique numbers of the semiconductor chips may be changed such that the second system memory region is allocated to the first semiconductor chip 110 and the first system memory region is allocated to the second semiconductor chip 120. For example, the remap signal may also be transmitted from the outside of the first semiconductor chip 110 and the second semiconductor chip 120, or may also be generated by system register blocks inside the first semiconductor chip 110 and the second semiconductor chip 120.

Referring to FIG. 1 and FIG. 8, in operation S210, a plurality of semiconductor chips, that is, the first semiconductor chip 110 and the second semiconductor chip 120, may receive a removal signal. For example, the removal signal may be included in the remap signal of FIG. 7. In operation S220, the first semiconductor chip 110 and the second semiconductor chip 120 may remove the private memory region from the memory map in response to the removal signal. When it is determined that the private memory regions are not required in a plurality of semiconductor chips, the semiconductor device 10 may use only a plurality of system memory regions by removing the private memory regions, and when performing internal operations or operations for other semiconductor chips, the plurality of semiconductor chips may use the address information of a system memory region corresponding to a certain semiconductor chip (e.g., one of the plurality of semiconductor chips). For instance, the plurality of semiconductor chips may use the address information of a mirror region of the system memory region corresponding to one of the plurality of semiconductor chips.

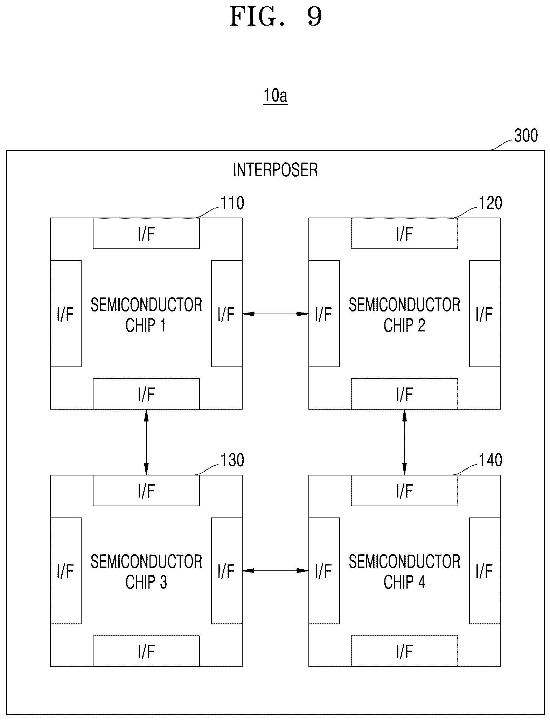

FIG. 9 is a diagram illustrating a semiconductor device 10a according to an embodiment. FIG. 10 is a diagram illustrating a memory map used in each of a plurality of semiconductor chips included in the semiconductor device 10a, according to an embodiment. In describing the semiconductor device 10a of FIG. 9, redundant descriptions given above with reference to FIG. 1 are omitted.

Referring to FIG. 9 and FIG. 10, the semiconductor device 10a may include an interposer 300 and a plurality of semiconductor chips, for example, first, second, third, and fourth semiconductor chips 110, 120, 130, and 140. Here, the first, second, third, and fourth semiconductor chips 110, 120, 130, and 140 may be homogeneous semiconductor chips. In some embodiments, the semiconductor device 10a may be an SoC.

The first, second, third, and fourth semiconductor chips 110, 120, 130, and 140 may be disposed (e.g., mounted) on the interposer 300 in a vertical direction (the Z axis). For example, the first, second, third, and fourth semiconductor chips 110, 120, 130, and 140 may be arranged on the interposer 300 in two rows (the X-axis direction) and two columns (the Y-axis direction). The first, second, third, and fourth semiconductor chips 110, 120, 130, and 140 may communicate with each other through an interface.

A memory map may include a first system memory region to a fourth system memory region respectively corresponding to the plurality of semiconductor chips, for example, the first, second, third, and fourth semiconductor chips 110, 120, 130, and 140, included in the semiconductor device 10a. Also, the memory map may include a private memory region shared by the plurality of semiconductor chips, that is, the first, second, third, and fourth semiconductor chips 110, 120, 130, and 140.

The minimum address to the maximum address of the memory map may be sequentially assigned to the private memory region and the first system memory region to the fourth system memory region. For example, the minimum address may be a start address (Start Address0) where the private memory region starts, and the private memory region may be allocated from the start address (Start Address0) to a region before a first start address (Start Address1) where the first system memory region starts. Also, the first system memory region may be allocated from the first start address (Start Address1) to a region before a second start address (Start Address2) where a second system memory region starts, the second system memory region may be allocated from the second start address (Start Address2) to a region before a third start address (Start Address3) where a third system memory region starts, the third system memory region may be allocated from the third start address (Start Address3) to a region before a fourth start address (Start Address4) where a fourth system memory region starts, and the fourth system memory region may be allocated from a fourth start address (Start Address4) to a region before the maximum address. The memory map of FIG. 10 illustrates an example in which four homogeneous memory chips are included in the semiconductor device 10a; however, a configuration of the memory map may be changed depending on the number of homogeneous semiconductor chips included in the semiconductor device 10a.

In order to drive the first, second, third, and fourth semiconductor chips 110, 120, 130, and 140, unique numbers may be assigned to identify the first, second, third, and fourth semiconductor chips 110, 120, 130, and 140. For example, a first system memory region may be allocated to the first semiconductor chip 110 to correspond to a first unique number, and a second system memory region may be allocated to the second semiconductor chip 120 to correspond to a second unique number. A third system memory region may be allocated to the third semiconductor chip 110 to correspond to a third unique number, and a fourth system memory region may be allocated to the fourth semiconductor chip 120 to correspond to a fourth unique number. When the unique numbers of the first, second, third, and fourth semiconductor chips 110, 120, 130, and 140 are changed, the first, second, third, and fourth system memory regions respectively corresponding to the first, second, third, and fourth semiconductor chips 110, 120, 130, and 140 may also be changed.

Each of the first, second, third, and fourth semiconductor chips 110, 120, 130, and 140 may perform an operation by using the system memory region selected to be accessed from among the first to fourth system memory regions. The first, second, third, and fourth semiconductor chips 110, 120, 130, and 140 may use a memory map including the same address information, and accordingly, the semiconductor device 10a may have an effect of using the first, second, third, and fourth semiconductor chips 110, 120, 130, and 140 as one semiconductor chip.

The private memory region is a memory region that may be accessed by each of the first, second, third, and fourth semiconductor chips 110, 120, 130, and 140, and may be an address space used by each of the first, second, third, and fourth semiconductor chips 110, 120, 130, and 140 to perform an internal operation. That is, each of the first, second, third, and fourth semiconductor chips 110, 120, 130, and 140 may perform an internal operation by accessing the private memory region, which is the same address space, in the memory map.

For example, the first, second, third, and fourth semiconductor chips 110, 120, 130, and 140 may each perform an operation by using the private memory region of the memory map when executing boot code, performing a remap operation for changing address information of the memory map, and/or executing device driver code for controlling a peripheral function block. The private memory region is an address space that is not affected by a change operation of the memory map, and accordingly, a stable operation may be performed, and the design complexity of a semiconductor device may be reduced. Also, because each of the semiconductor chips may perform internal operation by using the private memory region, a logic for identifying and processing the semiconductor chip during execution of the code may be removed, and accordingly, code may be optimized, and the operating performance may be improved.

The first to fourth system memory regions may each include a mirror region to which the private memory region is copied. Therefore, the first, second, third, and fourth semiconductor chips 110, 120, 130, and 140 may each use the mirror region to perform an internal operation, and may also use a mirror region of a corresponding system memory region. For example, the first semiconductor chip 110 may perform an operation of a memory controller (for example, 114 of FIG. 2) by using a first system memory region, and may perform an operation of a shared memory (for example, 115 of FIG. 2) by using the private memory region or mirror region.

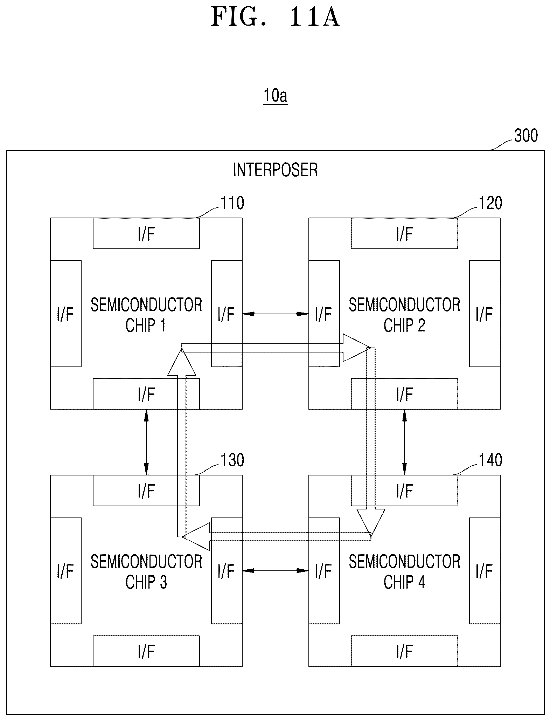

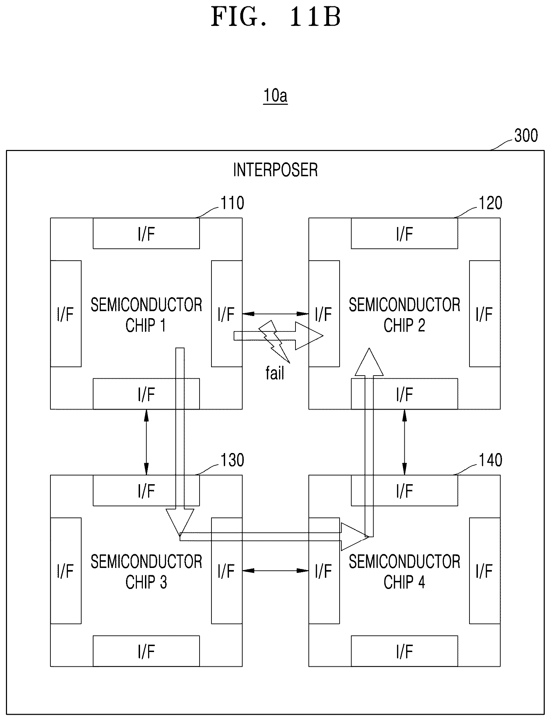

FIG. 11A and FIG. 11B are diagrams illustrating the semiconductor device 10a according to an embodiment.

Referring to FIG. 11A, a direction, in which the first, second, third, and fourth semiconductor chips 110, 120, 130, and 140 included in the semiconductor device 10a access each other, may be set. A memory map may be managed by networks included in the first, second, third, and fourth semiconductor chips 110, 120, 130, and 140, and the direction in which the first, second, third, and fourth semiconductor chips 110, 120, 130, and 140 access each other may be set in the memory map. For example, the direction may be set such that the first, second, third, and fourth semiconductor chips 110, 120, 130, and 140 access each other in a clockwise direction according to the arrangement of the first, second, third, and fourth semiconductor chips 110, 120, 130, and 140. That is, the first semiconductor chip 110 may directly access the second semiconductor chip 120, but the first semiconductor chip 110 may pass through the second semiconductor chip 120 to access the fourth semiconductor chip 140, and the first semiconductor chip 110 may pass through the second semiconductor chip 120 and the fourth semiconductor chip 140 to access the third semiconductor chip 130.

Referring to FIG. 11B, a failure may be detected in communication in which a certain semiconductor chip accesses another semiconductor chip. For example, a failure may be detected in communication in which a certain semiconductor chip accesses another semiconductor chip while testing an operation of the semiconductor device 10a. When a failure is detected, the semiconductor device 10a may change a direction in which a plurality of semiconductor chips, for example, the first, second, third, and fourth semiconductor chips 110, 120, 130, and 140, access each other. The access route (e.g., access direction) for any path that previously included the failure location may be changed to avoid the failure location.

For example, a failure may be detected in communication in which the first semiconductor chip 110 accesses the second semiconductor chip 120 due to an interface of the first semiconductor chip 110 or an interface of the second semiconductor chip 120. The semiconductor device 10a may change the access direction and may reset the access direction such that the first semiconductor chip 110 accesses the second semiconductor chip 120 in a counterclockwise direction, and the first semiconductor chip 110 may pass through the third semiconductor chip 130 and the fourth semiconductor chip 140 to access the second semiconductor chip 120. Therefore, even when a failure is detected in communication between semiconductor chips, the semiconductor device 10a may be continuously used by resetting an access direction between the semiconductor chips.

FIG. 12 is a diagram illustrating a semiconductor device 10b according to an embodiment.

Referring to FIG. 12, the semiconductor device 10b may include an interposer 300, a plurality of semiconductor chips, for example, a first semiconductor chip 110b and a second semiconductor chip 120b, and a plurality of memory chips, for example, first, second, third, and fourth memory chips 210, 220, 230, and 240. Here, the first semiconductor chip 110b and the second semiconductor chip 120b may be homogeneous semiconductor chips. In some embodiments, the semiconductor device 10b may be an SoC. The descriptions of the first semiconductor chip 110 and the second semiconductor chip 120 illustrated in FIG. 1 and so on may be applied in the same manner to descriptions of the first semiconductor chip 110b and the second semiconductor chip 120b.

The first semiconductor chip 110b, the second semiconductor chip 120b, and the first, second, third, and fourth memory chips 210, 220, 230, and 240 may be disposed (e.g., mounted) on the interposer 300 in a vertical direction (the Z-axis direction). The first semiconductor chip 110b may communicate with the first memory chip 210 and the second memory chip 220 through a second interface, and the second semiconductor chip 120b may communicate with the third memory chip 230 and the fourth memory chip 240 through a second interface. The first semiconductor chip 110b may communicate with the second semiconductor chip 120b through the first interface.

In some embodiments, the first, second, third, and fourth memory chips 210, 220, 230, and 240 may each be a volatile memory device, such as DRAM or SRAM, or may include a nonvolatile memory device, such as flash memory, PRAM, MRAM, FeRAM, or RRAM, or may include a high-performance memory device, such as high bandwidth memory (HBM), hybrid memory cube (HMC), or so on.

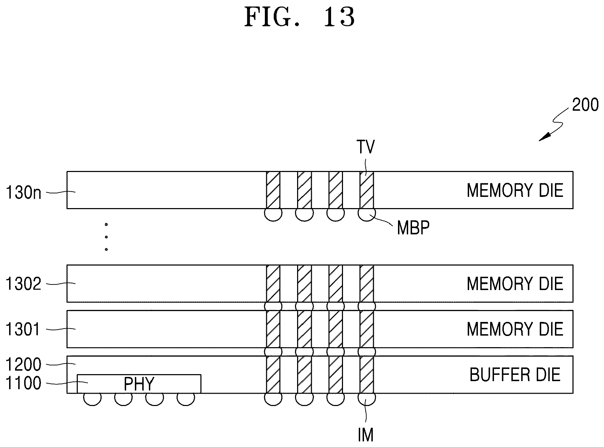

FIG. 13 is a cross-sectional view illustrating a memory chip 200 included in the semiconductor device 10b, according to an embodiment. The memory chip 200 of FIG. 13 may be, for example, one of the first, second, third, and fourth memory chips 210, 220, 230, and 240 of FIG. 12.

Referring to FIG. 13, the memory chip 200 may be a three-dimensional stacked memory device. The memory chip 200 may include a buffer die 1200 and a plurality of memory dies, for example, first to n^{th} memory dies 1301 to 130n stacked on the buffer die 1200. n may be a natural number greater than or equal to 3, and for example, n may be 4 or 8 and may be variously modified. The buffer die 1200 and the first to n^{th} memory dies 1301 to 130n may be configured as a single semiconductor package.

The memory chip 200 may include a plurality of through-vias TV passing through the buffer die 1200 and the first to n^{th} memory dies 1301 to 130n, and a plurality of micro-bumps MBP electrically connecting the through-vias TV to each other. The plurality of through-vias TV and the plurality of micro-bumps MBP may provide electrical paths between the buffer die 1200 and the first to n^{th} memory dies 1301 to 130n in the memory chip 200. The number of through-vias TV and the number of micro-bumps MBP may be changed without being limited to the numbers illustrated in FIG. 13. The n^{th} memory die 130n may not include the through-vias but is not limited in particular.

The first to n^{th} memory dies 1301 to 130n may each be a DRAM chip. For example, the first to n^{th} memory dies 1301 to 130n may each be a general purpose DRAM device such as double data rate synchronous dynamic random access memory (DDR SDRAM), a mobile DRAM device such as low power double data rate (LPDDR) SDRAM, a graphics DRAM device such as graphics double data rate (GDDR) synchronous graphics random access memory (SGRAM), or a DRAM device such as Wide input/output (I/O), high bandwidth memory (HBM), HBM2, HBM3, or hybrid memory cube (HMC) that provides high capacity and high bandwidth. However, the present disclosure is not limited thereto, and the first to n^{th} memory dies 1301 to 130n may each be a volatile memory device other than DRAM, or a nonvolatile memory device.

According to an embodiment, the first to n^{th} memory dies 1301 to 130n may have substantially the same size. That is, the first to n^{th} memory dies 1301 to 130n may have substantially the same planar shape and planar size.

The buffer die 1200 may provide a data input/output signal, a command, an address, and a chip select signal received from a memory controller to the first to n^{th} memory dies 1301 to 130n, or may perform an interface operation to provide the data input/output signal received from the first to n^{th} memory dies 1301 to 130n to the memory controller of the first semiconductor chip (for example, 110b of FIG. 12) or the second semiconductor chip for example, 120b of FIG. 12). The buffer die 1200 may include a PHY 1100 as an interface circuit to perform the interface operation. The PHY 1100 may correspond to the second interface of FIG. 12.

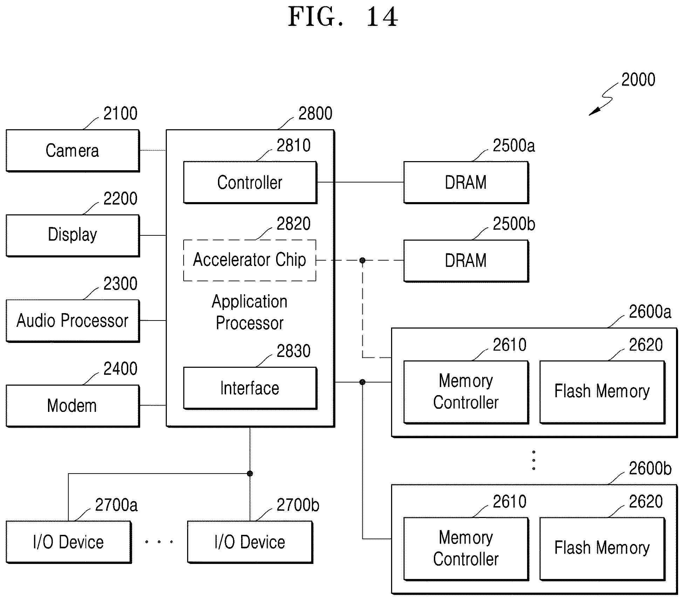

FIG. 14 is a block diagram of a system illustrating an electronic device including the semiconductor device 10, 10a, or 10b, according to an embodiment.

Referring to FIG. 14, a system 2000 may include a camera 2100, a display 2200, an audio processor 2300, a modem 2400, DRAMs 2500a and 2500b, flash memories 2600a and 2600b, I/O devices 2700a and 2700b, and an AP 2800. The system 2000 may be implemented by a laptop computer, a mobile phone, a smartphone, a tablet personal computer, a wearable device, a healthcare device, or an Internet of things (IoT) device. Also, the system 2000 may be implemented by a server or a personal computer.

The camera 2100 may capture still images or moving images according to a user's control, and may store the captured images or transmit the captured images to the display 2200. The audio processor 2300 may process audio data included in the flash memories 2600a and 2600b or the contents of a network. The modem 2400 may modulate and transmit signals for wired/wireless data transmission and reception, and may demodulate signals and restore the signals to original signals by a receiver. The I/O devices 2700a and 2700b may include devices that provide digital input and/or output functions, such as a universal serial bus (USB), a storage, a digital camera, a secure digital (SD)) card, a digital versatile disk (DVD), a network adapter, and a touch screen.

The AP 2800 may control all operations of the system 2000. The AP 2800 may include a controller 2810, an accelerator 2820 (for example, the accelerator is implemented as accelerator chip), and an interface 2830. The AP 2800 may control the display 2200 such that a part of the data stored in the flash memories 2600a and 2600b is displayed on the display 2200. When a user input is received through the I/O devices 2700a and 2700b, the AP 2800 may perform a control operation corresponding to the user input. The AP 2800 may include the accelerator 2820, which is a dedicated circuit for AI data arithmetic, or may have an accelerator chip separately from the AP 2800. The DRAM 2500b may be additionally disposed (e.g., mounted) in the accelerator block or the accelerator chip 2820. The accelerator 2820 is a functional block specialized in performing a certain function of the AP 2800, and may include a GPU, which is a functional block specialized in performing graphics data processing, an NPU, which is a block specialized in performing AI calculation and inference, and a data processing unit (DPU), which is a block specialized in data transmission.

In some embodiments, the accelerator block or accelerator chip 2820 may include the first and second semiconductor chips 110 and 120 described with reference to FIG. 1, the first to fourth semiconductor chips 110 to 140 described with reference to FIG. 9, or the first and second semiconductor chips 110b and 110b described with reference to FIG. 12. According to the semiconductor device of the present disclosure, a plurality of semiconductor chips may operate as a single chip, and thus, the operating performance may be improved.

The system 2000 may include the DRAMs 2500a and 2500b. The AP 2800 may control the DRAMs 2500a and 2500b through commands and mode register MRS settings that conform to joint electron device engineering council (JEDEC) standards, or may communicate by setting a DRAM interface protocol to use the unique function of a company, such as low voltage/high speed/reliability, and cyclic redundancy check (CRC)/error correction code (ECC) functions. For example, the AP 2800 may communicate with the DRAM 2500a through an interface that conforms to JEDEC standards, such as LPDDR4 and LPDDR5, and the accelerator block or accelerator chip 2820 may perform communication by setting a new DRAM interface protocol to control the DRAM 2500b for an accelerator with a higher bandwidth than the DRAM 2500a.

Although FIG. 14 illustrates only the DRAMs 2500a and 2500b, the present disclosure is not limited thereto, and any memory, such as PRAM, SRAM, MRAM, RRAM, FeRAM, or hybrid RAM, may be used as long as a bandwidth, a response speed, and voltage conditions of the AP 2800 or the accelerator chip 2820 are satisfied. The DRAMs 2500a and 2500b may have relatively smaller latency and bandwidth than the I/O devices 2700a and 2700b or the flash memories 2600a and 2600b. The DRAMs 2500a and 2500b may be initialized at the power-on time of the system 2000 to be used as a temporary storage for an operating system and application data when the operating system and application data are loaded, or to be used as an execution region for various types of software code.

The DRAMs 2500a and 2500b may perform the four basic operations, such as addition, subtraction, multiplication, and division, vector arithmetic, address arithmetic, or an FFT. Also, a function for performing inference may be performed by the DRAMs 2500a and 2500b. Here, the inference may be performed by a deep learning algorithm using an artificial neural network. The deep learning algorithm may include a training operation of training a model through various data and an inference operation of recognizing data with the trained model. In some embodiments, images captured by a user through the camera 2100 may be signal-processed and stored in the DRAM 2500b, and the accelerator block or accelerator chip 2820 may perform an AI data arithmetic for recognizing data by using the data stored in the DRAM 2500b and a function used for inference.

The system 2000 may include a plurality of storages or the flash memories 2600a and 2600b with a larger capacity than the DRAMs 2500a and 2500b. The accelerator block or accelerator chip 2820 may perform a training operation and AI data arithmetic by using the flash memories 2600a and 2600b. In some embodiments, the flash memories 2600a and 2600b may include a memory controller 2610 and a flash memory 2620, and may more efficiently perform the training operation and inference AI data arithmetic performed by the AP 2800 and/or the accelerator chip 2820 by using an arithmetic device included in the memory controller 2610. The flash memories 2600a and 2600b may store the images captured by the camera 2100 or the data transmitted through a data network. For example, the flash memories 2600a and 2600b may store augmented reality/virtual reality, high definition (HD) or ultra high definition (UHD) content.

Embodiments are set out in the following Clauses:
Clause 1. A semiconductor device comprising:
   a plurality of homogeneous semiconductor chips; and
   an interposer on which the plurality of homogeneous semiconductor chips are disposed,
   wherein
   each of the plurality of homogeneous semiconductor chips manages a memory map including address information,
   the memory map includes a plurality of system memory regions respectively allocated to the plurality of homogeneous semiconductor chips, and a private memory region shared by the plurality of homogeneous semiconductor chips,
   the private memory region is mirrored and copied to a mirror region of each of the plurality of system memory regions, and
   the plurality of homogeneous semiconductor chips performs internal operations by using the private memory region.
Clause 2. The semiconductor device of Clause 1, wherein
   each of the plurality of homogeneous semiconductor chips comprises a processor, an internal memory into which boot code is loaded, and a network configured to manage the memory map and connect the processor to the internal memory, and
   the processor accesses the internal memory by using at least one of the private memory region and the mirror region of the memory map to execute the boot code.
Clause 3. The semiconductor device of Clause 1 or Clause 2, wherein
   each of the plurality of homogeneous semiconductor chips comprises a processor, a plurality of peripheral function blocks, an internal memory into which device driver code for controlling the plurality of peripheral function blocks is loaded, and a network configured to manage the memory map and connect the processor to the internal memory, and
   the processor accesses the internal memory by using at least one of the private memory region and the mirror region of the memory map to execute the device driver code.
Clause 4. The semiconductor device of any preceding Clause, wherein
   each of the plurality of homogeneous semiconductor chips comprises a processor, a remap register block used for changing the memory map, and a network configured to manage the memory map and connect the processor to the remap register block, and
   the processor accesses the remap register block by using the private memory region of the memory map to remap the memory map.
Clause 5. The semiconductor device of Clause 4, wherein the processor accesses the remap register block to remove the private memory region from the memory map.
Clause 6. The semiconductor device of any preceding Clause, wherein
   the plurality of homogeneous semiconductor chips includes four semiconductor chips arranged in two columns and two rows, and
   a direction in which the four semiconductor chips access each other is preset.
Clause 7. The semiconductor device of any preceding Clause, wherein
   the memory map sequentially assigns a minimum address to a maximum address to the private memory region and the plurality of system memory regions corresponding to the plurality of homogeneous semiconductor chips.
Clause 8. A semiconductor device comprising:
   a first semiconductor chip and a second semiconductor chip, which are homogeneous; and
   an interposer on which the first semiconductor chip and the second semiconductor chip are disposed,
   wherein
   each of the first semiconductor chip and the second semiconductor chip manages a memory map including address information,
   the memory map includes a private memory region shared by the first semiconductor chip and the second semiconductor chip, a first system memory region allocated to the first semiconductor chip and including a first mirror region to which the private memory region is copied, and a second system memory region allocated to the second semiconductor chip and including a second mirror region to which the private memory region is copied, and
   the first semiconductor chip accesses the second semiconductor chip by using the second system memory region, and the second semiconductor chip accesses the first semiconductor chip by using the first system memory region.
Clause 9. The semiconductor device of Clause 8, further comprising at least one memory chip configured to communicate with one of the first semiconductor chip and the second semiconductor chip.
Clause 10. The semiconductor device of Clause 9, wherein the at least one memory chip includes a buffer die and a plurality of memory dies stacked on the buffer die.

As described above, embodiments are disclosed in the drawings and the present disclosure. Although certain terms are used to describe the embodiments, the terms are used only for the purpose of describing the technical idea of the present disclosure and are not used to limit the meaning or the scope of the present disclosure described in the claims. Therefore, those skilled in the art will understand that various modifications and equivalent other embodiments may be derived therefrom. Therefore, the true technical protection scope of the present disclosure should be determined by the technical idea of the appended claims.

While the present disclosure has been particularly shown and described with reference to embodiments thereof, it will be understood that various changes in form and details may be made therein without departing from the scope of the following claims.

## Claims

1. A semiconductor device comprising:
a plurality of homogeneous semiconductor chips (110, 120); and
an interposer (300) on which the plurality of homogeneous semiconductor chips (110, 120) are disposed,
wherein
each of the plurality of homogeneous semiconductor chips (110, 120) manages a memory map including address information,
the memory map includes a plurality of system memory regions respectively allocated to the plurality of homogeneous semiconductor chips (110, 120), and a private memory region shared by the plurality of homogeneous semiconductor chips (110, 120),
the private memory region is mirrored and copied to a mirror region of each of the plurality of system memory regions, and
the plurality of homogeneous semiconductor chips (110, 120) are configured to perform internal operations by using the private memory region.

2. The semiconductor device of claim 1, wherein
each of the plurality of homogeneous semiconductor chips (110, 120) comprises a processor (111, 121), an internal memory (115) into which boot code is loaded, and a network (113) configured to manage the memory map and connect the processor (111, 121) to the internal memory, and
for each of the plurality of homogeneous semiconductor chips (110, 120), the processor (111, 121) is configured to access the internal memory (115) by using at least one of the private memory region and the mirror region of the memory map to execute the boot code.

3. The semiconductor device of claim 1 or claim 2, wherein
each of the plurality of homogeneous semiconductor chips (110, 120) comprises a processor (111, 121), a plurality of peripheral function blocks (117_1, 117_n, 127_1, 127_n), an internal memory (115, 125) into which device driver code for controlling the plurality of peripheral function blocks (117_1, 117_n, 127_1, 127_n) is loaded, and a network (113, 123) configured to manage the memory map and connect the processor (111, 121) to the internal memory (115, 125), and
for each of the plurality of homogeneous semiconductor chips (110, 120), the processor (111, 121) is configured to access the internal memory (115, 125) by using at least one of the private memory region and the mirror region of the memory map to execute the device driver code.

4. The semiconductor device of any preceding claim, wherein
each of the plurality of homogeneous semiconductor chips (110, 120) comprises a processor (111, 121), a remap register block used for changing the memory map, and a network (113, 123) configured to manage the memory map and connect the processor (110, 120) to the remap register block, and
for each of the plurality of homogeneous semiconductor chips (110, 120), the processor (111, 121) is configured to access the remap register block by using the private memory region of the memory map to remap the memory map.

5. The semiconductor device of claim 4, wherein, for each of the plurality of homogeneous semiconductor chips (110, 120), the processor (111, 121) is configured to access the remap register block to remove the private memory region from the memory map.

6. The semiconductor device of any preceding claim, wherein
the plurality of homogeneous semiconductor chips (110, 120) includes four semiconductor chips arranged in two columns and two rows, and
a direction in which the four semiconductor chips access each other is preset.

7. The semiconductor device of any preceding claim, wherein
the memory map sequentially assigns a minimum address to a maximum address to the private memory region and the plurality of system memory regions corresponding to the plurality of homogeneous semiconductor chips (110, 120).

8. The semiconductor device of any preceding claim wherein:
the plurality of homogeneous semiconductor chips (110, 120) comprises a first semiconductor chip (110) and a second semiconductor chip (120);
the plurality of system memory regions comprises a first system memory region allocated to the first semiconductor chip (110) and including a first mirror region to which the private memory region is copied, and a second system memory region allocated to the second semiconductor chip (120) and including a second mirror region to which the private memory region is copied, and
the first semiconductor chip (110) is configured to access the second semiconductor chip (120) by using the second system memory region, and the second semiconductor chip (120) is configured to access the first semiconductor chip (110) by using the first system memory region.

9. The semiconductor device of claim 8, further comprising at least one memory chip (210, 220, 230, 240) configured to communicate with one of the first semiconductor chip (110) and the second semiconductor chip (120).

10. The semiconductor device of claim 9, wherein the at least one memory chip (210, 220, 230, 240) includes a buffer die (1200) and a plurality of memory dies (1301, 1302, 130n) stacked on the buffer die.

11. An operating method of a semiconductor device including a plurality of semiconductor chips, the operating method comprising:
assigning unique numbers to the plurality of semiconductor chips (S10);
allocating a plurality of system memory regions of a memory map including address information respectively corresponding to the plurality of semiconductor chips, based on the unique numbers (S20);
allowing each of the plurality of semiconductor chips to access another semiconductor chip in the plurality of semiconductor chips by using an address of the another semiconductor chip in the plurality of system memory regions of the memory map (S30); and
performing an internal operation of each of the plurality of semiconductor chips by using an address of a private memory region of the memory map (S40).

12. The operating method of claim 11, wherein
the performing of the internal operation of each of the plurality of semiconductor chips by using the address of the private memory region of the memory map (S40) is performed independently of the assigning of the unique numbers to the plurality of semiconductor chips (S10) and the allocating of the plurality of system memory regions respectively corresponding to the plurality of semiconductor chips (S20).

13. The operating method of claim 11 or claim 12, further comprising:
performing the internal operation of each of the plurality of semiconductor chips (S40) by using an address of a mirror region of each of the plurality of system memory regions to which the private memory region is copied.

14. The operating method of any of claims 11-13, further comprising remapping address information of a region excluding the private memory region in the memory map by using an address of the private memory region (S120).

15. The operating method of claim 14, further comprising:
receiving, by the plurality of semiconductor chips, remap signals from an outside of the plurality of semiconductor chips (S110),
wherein the address information is remapped in response to the remap signals.
